# DEMANDE DE BREVET EUROPEEN

(11) **EP 1 795 260 A1**
(43) Date de publication de la demande: **13.06.2007**
(21) Numéro de dépôt: 05301022.9
(22) Date de dépôt: 07.12.2005
(51) Int. Cl.: B01J 23/63, C01B 3/38, B01J 21/06, B01J 23/40, B01J 37/02, B01J 23/74

(54) **Catalyseur constitué d'un support solide, d'un oxyde, et d'une phase active métallique greffée sur l'oxyde, procédé pour sa préparation et application**

(71) Demandeur: L'AIR LIQUIDE, Société Anonyme pour l'Etude et l'Exploitation des Procédés Georges Claude, 75321 Paris Cedex 07 (FR)
(72) Inventeur: Del Gallo, Pascal, c/o L'Air Liquide SA, 91410 Dourdan (FR); Richet, Nicolas, c/o L'Air Liquide SA, 78330 Fontenay-Le-Fleury (FR)
(74) Mandataire: Conan, Philippe Claude

(57) **Abrégé**

Ensemble catalytique destiné à catalyser des réactions chimiques en phase gazeuses, constitué d'un support solide, sur la surface (Σ) duquel est fixé un oxyde d'ancrage (O) de nature chimique différente dudit support solide (Σ), ledit oxyde d'ancrage recouvrant une proportion surfacique non nulle de ladite surface dudit support solide (Σ) et d'une phase métallique catalytiquement active (M) pour la réaction chimique considérée, caractérisé en ce que en ce que ladite phase métallique catalytiquement active (M) est ancrée sur ledit support solide (Σ) par l'intermédiaire dudit oxyde d'ancrage (O), lui-même greffée sur ledit support solide (Σ).

## Description

L'invention appartient au domaine des catalyseurs supportés et à leur accrochage sur des substrats.

La microstructure initiale d'un catalyseur, en particulier la dispersion et la taille des particules de la phase active, ainsi que les interactions physiques et chimiques entre celles-ci et le support, jouent un rôle primordial dans l'efficacité et la stabilité au cours du temps. Un des modes de dégradation de l'activité catalytique est la coalescence des particules de phase active, en général des métaux nobles, tels le platine le rhodium ou le palladium ou des métaux de transition tels le nickel ou le cobalt.

Les matériaux catalytiques sont largement utilisés dans l'industrie pour l'accélération des réactions chimiques, en particulier celles entre deux phases gazeuses. On pourra citer, par exemple, la production de gaz de synthèse (H₂+CO) par reformage du méthane sur un lit catalytique, la recombinaison de l'oxygène après séparation à travers une membrane ou encore la réaction entre H₂ et O₂ dans les piles à combustible.

Les catalyseurs mis en oeuvre sont généralement constitués de deux phases, une phase active, souvent un métal noble, tels le platine, le rhodium ou le palladium ou un métal de transition tels le nickel ou le cobalt et un support, le plus souvent une céramique oxyde inerte vis-à-vis de la réaction à catalyser tels l'alumine (Al₂O₃) ou les oxydes mixtes d'aluminium et de magnésium ou d'aluminium et calcium (MgAl₂O₄ ; CaO - Al₂O₃).

La géométrie du support a fait l'objet de nombreux travaux (A.S. Bodke, S.S. Bharadwaj, L.D. Schmidt. 1998, J. of Cata. 179, p 138 - 149 ; brevet des Etats Unis d'Amérique publié sous le numéro US 6,726,853 ; demande internationale publiée sous le numéro WO 02/066371). En effet la surface développée est un paramètre important pour l'efficacité du catalyseur (en réalité la dispersion et la taille des particules métalliques). On parle de nombre de site métallique/g de catalyseur (mesure effectuée par chimisorption du CO et/ou H₂, FEG, ...). On rencontre couramment des supports céramiques, voire métallique dans certains cas, de catalyseurs en forme de barillets, de pastilles, de monolithes plus ou moins poreux ou de mousses.

Cependant ces catalyseurs subissent au cours du temps un phénomène de désactivation qui conduit à la baisse de leurs performances. En général, cette désactivation est observée par une chute du rendement de la réaction (produit de la conversion et de la sélectivité), c'est-à-dire soit par une baisse du taux de conversion des réactifs et/ou par une modification de la sélectivité des produits formés.

La désactivation des catalyseurs a essentiellement quatre causes :
La première est le blocage des sites catalytiques, soit par la formation d'un produit solide qui les emprisonne (encapsulation), soit par la formation d'un composé stable avec la phase active, comme le dépôt de carbone sous certaines conditions dans la réaction de reformage du méthane (J.R. Rostrup-Nielsen, J.-H. Bak Hansen, 1993, Journal of catalysis 144, 38-49 ; H.S. Bengaard, J.K. Norskov, J.S. Sechested, B.S. Clausen, L.P. Nielsen, A.M. Molenbroek, J.R. Rostrup-Nielsen, Journal of Catalysis, 2002, vol. 209, p365) ou la formation de soufre qui réagit avec le Ni pour former le sulfure de nickel (NiS₂) qui est un composé stable (P. Van Beurden, 2004, ECN report).

Pour palier, par exemple, au problème de formation des dépôts carbonés et de l'encapsulation, les recherches se sont portées sur le développement de matériaux céramiques capables d'oxyder le carbone qui se forme/dépose lors de la réaction (J.R. Rostrup-Nielsen, J.-H. Bak Hansen, 1993, Journal of catalysis 144, 38-49). Les oxydes capables de fournir ou de conduire l'oxygène, comme Ce-ZrO₂ ont montré une très bonne efficacité contre la désactivation du catalyseur par dépôt de carbone (F.B. Noronha, A. Shamsi, C. Taylor, E.C. Fendly, S. Stagg-Williams and D.E. Resasco, 2003 Catalysis Letters 90: 13-21 ; P. Van Beurden, 2004, ECN report ; E. Ramirez-Cabrera, A. Atkinson and D. Chadwick, Catalytic steam reforming of methane over CeO.9GdO.1O2-x; 2004 Applied Catalysis B 47: 127-131 ; demande internationale publiée sous le numéro WO 2004/047985). Le carbone est oxydé sous forme de CO ou de CO₂ (M.V.M. Souza, M. Schmal. 2005, Applied Cata. A: General 281, p 19-24 ; demande internationale publiée sous le numéro WO 02/20395). Dans le cas de l'empoisonnement au soufre, un traitement en milieu réducteur ou oxydant est en général suffisant.

La seconde cause est l'évolution de la surface spécifique du support. Les géométries du support de la phase active sont définies pour proposer la surface d'échange la plus grande possible avec les réactifs et pour limiter les pertes de charge dans le lit de catalyseur. Les particules de phase active sont distribuées de manière aléatoires en surface et/ou à coeur du support en fonction du procédé d'élaboration utilisé (extrusion, enduction, spray drying, ...). En général, au moins deux niveaux de porosité sont développés sur ces supports. Le premier est la macroporosité qui dépend de la géométrie de la pièce et le second, la microporosité due à l'empilement des particules, en général céramique, qui le constitue. Or lors de l'utilisation du catalyseur à haute température (>700°C), une densification partielle de l'empilement des particules (frittage) est activée. La surface d'échange avec l'atmosphère diminue d'autant, avec le risque d'emprisonner des particules de phase active. L'activité du catalyseur décroît donc rapidement jusqu'à atteindre un niveau d'équilibre lorsque toute la porosité est comblée. En générale, cette évolution est subie et prise en compte lors du dimensionnement du lit catalytique. Ces dernières années, le développement de mousses métalliques ou céramiques est une voie de recherche intéressante pour stabiliser la macroporosité du support (A.S. Bodke, S.S. Bharadwaj, L.D. Schmidt. 1998, J. of Cata. 179, p 138-149 ; demande internationale publiée sous le numéro WO 02/066371 ; brevet des Etats Unis d'Amérique publié sous le numéro US 6,726,853) Cette évolution de microstructure se déroule généralement lors des premiers jours de fonctionnement et lorsque les paramètres opératoires sont modifiés vers des conditions encore plus dures (élévation de température, de pression).

La troisième cause de désactivation des catalyseurs est l'oxydation de la phase active. Les catalyseurs sont en général des métaux nobles (Pt, Pd, Rh, Ir, ...) ou de transition (Ni, Co, ...). L'élaboration des catalyseurs, support et phase active, est souvent réalisée en atmosphère oxydante, ce qui conduit à la formation d'oxydes. Un prétraitement sous atmosphère réductrice est obligatoire avant utilisation pour transformer ces oxydes métalliques en métaux. Cependant, les réactions chimiques peuvent mettre en jeu des espèces oxydantes susceptibles de conduire à l'oxydation des particules de phase active. Il est souvent possible de régénérer le catalyseur par un traitement sous atmosphère réductrice (brevet des Etats Unis d'Amérique publié sous le numéro US 6,726,853) ou d'introduire, dans le mélange de gaz entrant dans le réacteur, une espèce réductrice qui décomposera l'oxyde. Une autre solution consiste à élaborer un catalyseur auto régénérant, de type Pd/LaMnO₃/La-γAl₂O₃, par formation de solutions solides réversibles entre la phase active et un support perovskite. Lors d'un traitement thermique à 1000°C, le Pd remonte à la surface du support en présentant une bonne dispersion, puis il s'oxyde en PdO pendant la descente en température rapide. Dans des conditions de combustion du méthane, deux sites catalytiques sont actifs : un à basse température, PdO et un à haute température LaMnO₃. Au dessus de 700°C, l'oxyde de palladium se réduit en palladium métallique et perd son activité catalytique, le support prend alors le relais dans le mécanisme d'oxydation du méthane. Dès 800°C une solution solide se forme entre le palladium et la perovskite. Lors d'un refroidissement du système, à partir d'une température supérieure à 800°C, le catalyseur se régénère. Cette méthode de régénération permet d'éviter le grossissement des grains du catalyseur et du support perovskite actif. Cette fonctionnalité intéressante est liée à la capacité de former des solutions solides réversibles avec la perovskite à partir de 800°C (S. Cimino, L. Lisi, R. Pirone, G. Russo, 2004 Ind. Eng. Chem. Res. 43: 6670-6679)

Enfin la quatrième cause de désactivation des catalyseurs est la coalescence des particules de phase active issue de la diffusion/ségrégation/frittage de ces dernières en surface du support céramique. C'est une source importante de désactivation du catalyseur, principalement (i) si ledit support céramique ne présente aucune affinité ni physique, ni chimique avec la phase active métallique, (ii) si sa surface BET et son volume poreux sont quasi nuls ou (iii) si aucune rugosité de surface n'est développée (G.E.Dolev, G.S. Shter, Grader. 2003, J. of Cat., vol. 214, p146-152 ; C.G. Granqvist, R.A. Buhrman, Appl. Phys. Lett., 1975, vol 27, p693 ; C.G. Granqvist, R.A. Buhrman, Journal of catalysis, 1976, vol 42, p477 ; C.G. Granqvist, R.A. Buhrman, Journal of catalysis, 1977, vol 46, p238 ; C.H. Bartholomew, Appl. Cata. General A, 1993, vol 107, p1 ; J.R. Rostrup-Nielsen, J.-H. Bak Hansen, 1993, Journal of catalysis 144, 38-49). L'activité initiale d'un catalyseur, outre les paramètres cités précédemment, dépend de la distribution et de la taille des particules de phase active (brevet des Etats Unis d'Amérique publié sous le numéro US 6,726,853). Plus elles sont petites (nanométriques) et bien dispersées, plus les échanges avec l'atmosphère de réaction seront nombreux. Ceci permet également dans le cas de la réaction de reformage du méthane de limiter la formation de carbone (demande de brevet européen publiée sous le numéro EP 1 449 581). On cherche donc, en général, à obtenir des particules nanométriques parfaitement dispersées, c'est-à-dire isolées les unes des autres (J. Wei, E. Iglesia. 2004, J. of Cata. 224, p 370-383.) et parfaitement stables (ancrages vis-à-vis du support). Cependant lors de l'utilisation du catalyseur à haute température, ces petites particules nanométriques (2-50 nm) ont tendance à diffuser à la surface du support et à coalescer (formation de clusters microniques) pour former des particules plus grosses et moins actives (G.E.Dolev, G.S. Shter, Grader. 2003, J. of Cat., vol. 214, p146-152 ; C.H. Bartholomew, Appl. Cata. General A, 1993, vol. 107, p1). On observe couramment une désactivation lente de catalyseur à travers la chute de la conversion et/ou une modification de la sélectivité.
Les travaux décrits dans la demande de brevet européen publiée sous le numéro EP 1 378 290, sur des catalyseurs à base nickel, divulgue une tentative de limitation de la diffusion de la phase active à la surface du support (grossissement des particules), en augmentant sa température de fusion. Pour cela, on ajoute au nickel un métal, or ou argent, pour réaliser un alliage à température de fusion élevée. Cette solution, si elle limite la diffusion de la phase active, entraîne également un fort surcoût avec l'utilisation de tels métaux (Ag, Au) dans la composition de la phase active.

Une autre solution pour limiter la coalescence des particules de phase active consiste à réaliser un traitement thermique pour faire grossir les particules les plus petites. On peut considérer qu'il s'agit de faire vieillir « artificiellement » le catalyseur de manière contrôlée avant son utilisation. Cette solution entraîne forcément un mauvais rapport entre la masse de phase active introduite lors de l'élaboration et la masse réellement active (demande de brevet des Etats Unis d'Amérique publiée sous le numéro US 2005/0049317).

Le développement d'interactions chimiques fortes entre la phase active et le support est également une solution très intéressante pour limiter la diffusion de surface de la phase active. Deux approches peuvent être proposées, la première en modifiant la composition chimique du support et la seconde en modifiant la nature de la phase active (L. Mo, J. Fei, C. Huang, X. Zheng. 2003, J. Mol. Cata. A: Chemical 193, p 177-184 ; O. Yamazaki, K. Tomishige, K. Fujimoto. 1996, Applied Cata. A: General 136, p49-56 ; R.M. Navarro, M.C. Alvarez-Galvan, M. Cruz Sanchez-Sanchez, F. Rosa, J.L.G. Fierro 2005, Applied Cata. B: Environnement 55, p 229-241.).

La demande internationale publiée sous le numéro WO 02/066371 divulgue un procédé d'élaboration comportant l'imprégnation d'alumine de grande surface spécifique par du nitrate de Mg pour former une spinelle MgAl₂O₄. Le métal actif est ensuite déposé sur ce matériau. La poudre ainsi obtenue peut ensuite être déposée sur une mousse métallique type FeCrAlY ou tout autre support présentant une surface d'échange importante. La spinelle peut être remplacée par de la zircone et le dépôt de la phase métallique être réalisé après celui de la spinelle ou de la zircone sur la mousse. Les auteurs abordent également l'utilisation de tels catalyseurs dans des microcanaux. Ils montrent qu'ils arrivent à diminuer le temps de contact par rapport à des catalyseurs conventionnels mais sans fournir d'explications. Cependant les auteurs ne contrôlent pas la dispersion et la taille des particules métalliques et limitent le support à ces deux oxydes inertes.

Les demandes internationales publiées sous les numéros WO 02/058829, WO 02/058830 et WO 2005/046850 divulguent le contrôle d'une architecture/microstructure par l'utilisation d'agents bloquants céramiques pour diverses applications mettant en oeuvre des matériaux céramiques.

C'est pourquoi l'invention a pour objet un ensemble catalytique destiné à catalyser des réactions chimiques en phase gazeuses, constitué d'un support solide, sur la surface (Σ) du quel est fixé un oxyde d'ancrage (O) de nature chimique différente de celle dudit support solide (Σ), ledit oxyde d'ancrage recouvrant une proportion surfacique non nulle de ladite surface dudit support solide (Σ) et d'une phase métallique catalytiquement active (M) pour la réaction chimique considérée, caractérisée en ce que ladite phase métallique catalytiquement active (M) est ancrée sur ledit support solide (Σ) par l'intermédiaire dudit oxyde d'ancrage (O), lui-même greffée sur ledit support solide (Σ).

Selon un aspect de la présente invention, par phase métallique catalytiquement active (M), on désigne notamment les métaux tels que le platine, le palladium, le rhodium, l'iridium, le cobalt ou le nickel des alliages comportant lesdits métaux.

Par oxyde d'ancrage (O) on désigne notamment les oxydes de bore, d'aluminium, de gallium, de cérium, de silicium, de titane, de zirconium, de zinc, de magnésium ou de calcium, les oxydes mixtes de métaux alcalino-terreux de métaux, les silicates d'aluminium et/ou de magnésium ; les phosphates de calcium et leurs dérivés ; ou bien parmi les oxydes céramiques dopés qui, à la température d'utilisation, sont sous forme d'un réseau cristallin présentant des lacunes en ions oxydes et plus particulièrement sous forme de phase cubique, de phase fluorite, de phase perovskite, de type Aurivillius, de phase Brownmillerite ou de phase pyrochlore. Comme exemples de tels oxydes il y a ceux choisis parmi l'oxyde de magnésium (MgO), l'oxyde de calcium (CaO), l'oxyde d'aluminium (Al₂O₃), l'oxyde de gadolinium (Gd₂O₃), l'oxyde d'yttrium (Y₂O₃) l'oxyde de titane (TiO₂), l'oxyde de zirconium (ZrO₂), la cérine (CeO₂), les oxydes mixtes de strontium et d'aluminium SrAl₂O₄ ou Sr₃Al₂O₆ ; les oxydes mixtes de cérium et de gadolinium (CeₓGd₁₋ₓO_{2-δ}), les oxydes mixtes de cérium et de zirconium (CeₓZr₁₋ₓO_{2-δ}), l'oxyde mixte de baryum et de titane (BaTiO₃) ; l'oxyde mixte de calcium et de titane (CaTiO₃) ; la mullite (2SiO₂ 3Al₂O₃), la cordiérite (Mg₂Al₄Si₅O₁₈) ou la phase spinelle MgAl₂O₄ ; l'hydroxy apatite Ca₁₀(PO₄)₆(OH)₂ ou le phosphate tricalcique Ca₃(PO₄)₂ ou encore l'oxyde de lanthane et de nickel (LaNiO₃).

Comme exemples d'oxydes céramiques dopés qui, à la température d'utilisation, sont sous forme d'un réseau cristallin présentant des lacunes en ions oxydes, il y a :
(a) - Les oxydes de formule (I) :

   (MₐO_{b})₁₋ₓ (R_{c}O_{d})ₓ (I),

   dans laquelle M représente au moins un atome trivalent ou tétravalent principalement choisi parmi, le bismuth (Bi), le cérium (Ce), le zirconium (Zr), le thorium (Th), le gallium (Ga) ou l'hafnium (Hf), a et b sont tels que la structure MₐO_{b} est électriquement neutre, R représente au moins un atome divalent ou trivalent choisi principalement parmi le magnésium (Mg), le calcium (Ca) ou le baryum (Ba), le strontium (Sr), le gadolinium (Gd), le scandium (Sc), l'ytterbium (Yb), l'yttrium (Y), le samarium (Sm) l'erbium (Er), l'indium (In), le niobium (Nb) ou le lanthane (La), c et d sont tels que la structure R_{c}O_{d} est électriquement neutre, x est généralement compris entre 0,05 et 0,30 et plus particulièrement, entre 0, 075 et 0,15. Comme exemples de tels composés de formule (I), il y a ceux de formule (Ia) :

   (ZrO₂)₁₋ₓ (Y₂O₃)ₓ, (Ia),

   dans laquelle x est compris entre 0,05 et 0,15,
   ou de formule (Ib) :

   Ce₁₋ₓGdₓO_{2-δ}

   dans laquelle x est compris entre 0,01 et 0,5,
   ou de formule (Ic) :

   Ce₁₋ₓZrₓO₂

   Dans laquelle x est compris entre 0,5 et 0,75 ;
   Comme exemples d'oxydes céramiques dopés qui, à la température d'utilisation, sont sous forme d'un réseau cristallin présentant des lacunes en ions oxydes, il y a encore :
(b) - Les matériaux pérovskites, de formule (II) :

   [Ma₁₋ₓ Ma'ₓ] [Mb_{1-y} Mb'_{y}] O_{3-w} (II)

   dans laquelle, Ma et Ma', identiques ou différents, sont choisis dans les familles des alcalino terreux, des lanthanides et des actinides et plus particulièrement parmi La, Ce, Pr, Nd, Pm, Sm, Eu, Gd, Tb, Dy, Ho, Er, Tm, Yb, Lu, Y, ou les Mg, Ca, Sr ou Ba, Mb et Mb', identiques ou différents, représentent un ou plusieurs atomes choisis parmi les métaux de transition, et plus particulièrement parmi Sc, Ti, V, Cr, Mn, Fe, Co, Ni, Cu, Zn ou Ga, x et y, identiques ou différents, sont supérieurs ou égaux à 0 et inférieurs ou égaux à 1 et w est tel que la structure en cause est électriquement neutre.

Comme exemples de tels composés de formule (II), il y a les manganites - lanthane - calcium (CaᵤLaᵥMnO_{3-w}), les manganites - lanthane - strontium (LaᵤSrᵥMnO_{3-w}), les cobaltites - lanthane - strontium (LaᵤSrᵥCoO_{3-w}), les cobaltites - lanthane - calcium (CaᵤLaᵥCoO_{3-w}), les cobaltites - gadolinium - strontium (GdᵤSr_{y}CoO_{3-w}), les chromites - lanthane - strontium (LaᵤSrᵥCrO_{3-w}), les ferrites - lanthane - strontium (LaᵤSrᵥFeO_{3-w}), les ferrites dopés - lanthane - strontium - métal de transition (LaᵤSrᵥFe_{c}Mb'_{d}O_{3-w}), telles que les ferrocobaltites - lanthane - strontium (LaᵤSrᵥCo_{d}Fe_{c}O_{3-w}), composés pour lesquels les sommes u + v et c + d sont égales à 1 et w est tel que la structure en cause est électriquement neutre ; La_{0,6}Sr_{0,4}Co_{0,8}Fe_{0,2}O_{3-w}, La_{0,5}Sr_{0,5}Fe_{0,9}Ti_{0,1}O_{3-w}, La_{0,6}Sr_{0,4}Fe_{0,9}Ga_{0,1}O_{3-w}, La_{0,5}Sr_{0,5}Fe_{0,9}Ga_{0,1}O_{3-w} ou La_{0,6}Sr_{0,4}Fe_{0,9}Ti_{0,1}O_{3-w}.

Dans l'ensemble tel que défini précédemment, le couple phase active métallique/oxyde bloquant ne doit pas former d'eutectique en deçà de la température d'utilisation, pour éviter l'emprisonnement de la phase active dans un composé liquide à cette température d'utilisation ce qui conduit à une perte d'activité du catalyseur. Comme exemples de tels couples phase active métallique/oxyde bloquant, il y a les couples Pt-CeO₂ et Rh-CeO₂, (Pt,Rh)-CeₓGd₁₋ₓO₂ ou (Pt,Rh)-Y₂O₃-ZrO₂ .Ces oxydes stabilisants peuvent en outre fournir de l'oxygène pour oxyder les éventuels dépôts de carbone qui peuvent empoisonner la phase active dans la réaction de reformage du méthane.

Le matériau constitutif de la surface (Σ) dudit support est notamment choisi parmi les oxydes de bore, d'aluminium, de gallium, de cérium, de silicium, de titane, de zirconium, de zinc, de magnésium ou de calcium, les oxydes mixtes de métaux alcalino-terreux, de métaux, les silicates d'aluminium et/ou de magnésium ; les phosphates de calcium et leurs dérivés ; les alliages métallique du type Ni-Cr utilsables à des températures jusqu'à 1000°C. Comme exemple de support, il y a par exemple, des substrats lisses sans rugosité comme une surface du type plaque métallique, ou bien des substrats de type mousse métallique, mousse céramique ou substrat métallique revêtu d'une couche céramique.

L'invention a aussi pour objet un procédé de préparation d'un ensemble tel que défini précédemment, comprenant :
une étape (a) de préparation d'une suspension (S_{O}) dans un solvant comprenant de 5 % à 50 % volumique de poudre de l'oxyde d'ancrage (O) et éventuellement jusqu'à 25 % massique d'un ou plusieurs additifs choisis parmi les agents dispersants, les agents liants et/ ou les agents plastifiants;
une étape (b) de dépôt de l'oxyde d'ancrage (O) sur le support solide, par application de ladite suspension (S_{O}) préparée à l'étape (a) sur la surface (Σ) dudit support solide ;
une étape (c) de traitement thermique à une température comprise entre 300°C et 1200°C de l'oxyde d'ancrage (O), déposé sur la surface (Σ) du support solide ;
une étape (d) d'imprégnation dune solution (S_{M}) de précurseur de la phase active métallique (M), sur l'oxyde d'ancrage (O), préalablement déposée sur la surface (Σ) du support solide ;
une étape (e) de décomposition du précurseur de la phase active (M) imprégné sur l'oxyde d'ancrage (O) par un traitement thermique à une température comprise entre 200°C et 900°C., pour générer ladite phase active métallique (M).

Selon un autre aspect du procédé tel que défini ci-dessus, il comprend en outre une étape (a1) de désagglomération de la suspension préparée à l'étape (a) avant la mise en oeuvre à l'étape (b)

Selon un autre aspect du procédé tel que défini ci-dessus, il comprend aussi une étape (b1) de séchage de l'oxyde d'ancrage (O) déposé sur la surface (Σ) du support solide, avant la mise en oeuvre de l'étape (c).

L'invention a aussi pour objet une variante du procédé tel que défini précédemment, comprenant les étapes suivantes :
une étape (f) de séchage de la suspension de l'oxyde d'ancrage (O) préparée à l'étape (a), pour éliminer le solvant et obtenir une poudre (P_{O}) comprenant l'oxyde d'ancrage (O) et les éventuels additifs ;
une étape (g) de mélange de la poudre (P_{O}) obtenue à l'étape (f), avec la solution (S_{M}) de précurseur de la phase active métallique (M) pour obtenir une suspension (S_{OM}) ;
une étape (h) de séchage de ladite suspension (S_{OM}) obtenue à l'étape (g), jusqu'à élimination complète du solvant ;
une étape (i) de traitement thermique à une température comprise entre 200°C et 900°C, du mélange obtenu à l'étape (h), pour obtenir une poudre (P_{OM}) d'oxyde d'encrage (O) imprégné de ladite phase active métallique (M) ;
une étape (j) de préparation d'une suspension (S'_{OM}) de la poudre (P_{OM}) obtenue à l'étape (i) dans un solvant
une étape (k) de dépôt de l'oxyde d'ancrage (O) imprégné de la phase active (M), sur la surface (Σ) du support solide, par application de ladite suspension (S'_{OM}) préparée à l'étape (j), sur la surface (Σ) dudit support.

13. Variante du procédé tel que défini à la revendication 9, comprenant les étapes suivantes :
une étape (f) de séchage de la suspension de l'oxyde d'ancrage (O) préparée à l'étape (a), pour éliminer le solvant et obtenir une poudre (P_{O}) comprenant l'oxyde d'ancrage (O) et les éventuels additifs ;
une étape (g) de mélange de la poudre (P_{O}) obtenue à l'étape (f), avec la solution (S_{M}) de précurseur de la phase active métallique (M) pour obtenir une suspension (S_{OM}) ;
une étape (m) de désagglomération de (S_{OM}) obtenue à l'étape (g) ;
une étape (n) de dépôt de l'oxyde d'ancrage (O) imprégné du précurseur de la phase active (M), sur la surface (Σ) du support solide, par application de ladite suspension (S_{OM}) désagglomérée à l'étape (m), sur ladite surface (Σ) ;
une étape (o) de traitement thermique à une température comprise entre 200°C et 1200°C, dudit l'oxyde d'ancrage (O) imprégné du précurseur de ladite phase active métallique (M), déposé sur la surface (Σ) du support solide, pour obtenir ledit oxyde d'ancrage (O) imprégné de ladite phase active métallique (M).

L'invention a encore pour objet une variante du procédé tel que défini précédemment, comprenant les étapes suivantes :
une étape (f) de séchage de la suspension de l'oxyde d'ancrage (O) préparée à l'étape (a), pour éliminer le solvant et obtenir une poudre (P_{O}) comprenant l'oxyde d'ancrage (O) et les éventuels additifs ;
une étape (g) de mélange de la poudre (P_{O}) obtenue à l'étape (f), avec la solution (S_{M}) de précurseur de la phase active métallique (M) pour obtenir une suspension (S_{OM}) ;
une étape (m) de désagglomération de (S_{OM}) obtenue à l'étape (g) ;
une étape (n) de dépôt de l'oxyde d'ancrage (O) imprégné du précurseur de la phase active (M), sur la surface (Σ) du support solide, par application de ladite suspension (S_{OM}) désagglomérée à l'étape (m), sur ladite surface (Σ) ;
une étape (o) de traitement thermique à une température comprise entre 200°C et 1200°C, dudit l'oxyde d'ancrage (O) imprégné du précurseur de ladite phase active métallique (M), déposé sur la surface (Σ) du support solide, pour obtenir ledit oxyde d'ancrage (O) imprégné de ladite phase active métallique (M).

Les variantes du procédé telles que définies ci-dessus peuvent aussi comprendre :
une étape (l) de traitement thermique à une température comprise entre 200°C et 1200°C de l'oxyde d'ancrage (O) imprégné de ladite phase active métallique (M), déposé sur la surface (Σ) du support solide.

Un tel procédé tel que défini précédemment ou ses variantes sont par exemple mis en oeuvre pour fixer une phase métallique catalytiquement active (M) sur la surface intérieure (Σ) d'un réacteur. Comme exemple d'une telle mise en oeuvre, il y a l'élaboration d'une couche de catalyseur de la réaction d'oxydation du gaz naturel par de l'oxygène sur une face de la membrane d'un réacteur catalytique membranaire. L'oxygène étant séparé d'un flux d'air introduit sur l'autre face de la membrane par conduction ionique à travers ladite membrane.

Les applications visées par l'objet de la présente invention ont trait par exemple aux réacteurs membranaires catalytiques pour la production de gaz de synthèse, aux générateurs céramiques oxygène et aux piles à combustible à électrolyte solide (Solid Oxide Fuel Cell), De manière générale le procédé décrit, permet l'élaboration de tout catalyseur constitué d'un support solide, actif ou non, et d'une phase active. De plus, les procédés développés sont particulièrement adaptés pour réaliser des dépôts de catalyseur sur des pièces de formes complexes ou sur des surfaces difficiles d'accès.

Dans le procédé ou ses variantes, l'utilisation de poudre nanométrique dudit oxyde d'ancrage (O) permet de déposer des particules actives métalliques dans des endroits très étroits comme des canaux de l'ordre du millimètre de diamètre ou dans des endroits difficiles d'accès comme des plaques usinées, l'intérieur de tubes, les barillets, les échangeurs thermique. De plus, comme les particules de petite taille sont très réactives, le traitement thermique d'accrochage entre l'oxyde bloquant et le support peut être réalisé à température modérée, limitant l'impact sur les autres matériaux comme celui de la surface (Σ) du support solide. Il est, de plus, possible de greffer les particules de phase active sur des poudres plus grossières en fonction de l'application recherchée et des limitations de chaque application. Par poudre nanométrique, on entend des poudres de particules de diamètre moyen compris entre 1 et 800 nanomètres.

La bonne dispersion de la phase métallique active présente un atout économique considérable, puisqu'il est possible de l'utiliser en quantité beaucoup plus faible. Il devient donc possible d'utiliser plus largement à l'échelle industrielle, des métaux nobles tels que le platine ou le rhodium qui sont beaucoup plus actifs catalytiquement, mais aussi plus onéreux. Cette bonne dispersion de la phase métallique catalytique a aussi un impact positif sur la taille des équipements, le catalyseur étant plus efficace. La réalisation de suspensions contenant plusieurs phases actives est également facilement envisageable, ce qui facilite l'emploi de phase active binaire de type Pt-Rh,... plus stables que les métaux purs.

Dans le procédé et ses variantes telles que décrites ci-dessus, l'imprégnation de la phase métallique sur l'oxyde est réalisée par "spray coating", par "dip coating" ou "par spin coating" ou par "electroless plating" ; l'ancrage de l'oxyde, imprégné ou non de la phase métallique, sur la surface (Σ) du support solide est réalisée par ""par slurry", par "spray coating", par "dip coating" ou "par spin coating".

L'exposé suivant explicite l'invention sans toutefois la limiter.

L'invention telle que définie ci-dessus se fonde sur le concept d'oxyde bloquant et a trait en particulier à des procédés d'élaboration permettant de contrôler la microstructure d'un matériau catalyseur, de disperser des particules nanométriques de phase active sur un support et d'assurer la stabilité de la taille des particules de phase active et leur dispersion dans le temps.

### 1 - Concept d'oxyde bloquant

Comme décrit dans la demande internationale publiée sous le numéro WO 2005/046850, l'ajout d'un agent bloquant limite la croissance des grains dans les pièces céramiques en limitant la diffusion de la matière en volume. Il a été supposé qu'un oxyde bloquant pouvait aussi limiter la diffusion surfacique des particules de phase active d'un catalyseur.

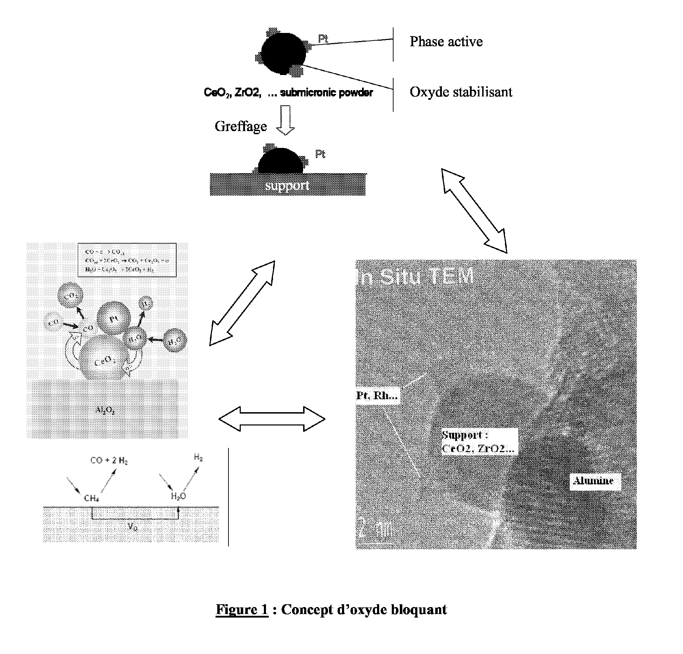

La Figure 1 illustre ce concept. Les particules de phase active sont d'abord greffées sur un oxyde bloquant qui peut être par exemple CeO₂, ZrO₂ ou Ce1-xZrxO, sous forme de poudre. Il sera préférentiellement capable de stocker, de relâcher ou de conduire dans son réseau cristallin de l'oxygène. L'oxyde bloquant recouvert de la phase active est ensuite déposé à la surface d'un support par toute technique adaptée. On préférera l'enduction à partir d'une suspension qui permet d'obtenir un dépôt homogène même sur des pièces de forme complexe ou présentant des zones d'accès difficile. Dans ce dernier cas, on préférera utiliser une poudre d'oxyde bloquant nanométrique afin de faciliter la pénétration de la suspension dans les zones étroites, sans risque de bouchage. La photo de la Figure 1 met en évidence que la surface du support sur laquelle est greffé l'oxyde imprégné du métal, est lisse et sans rugosité et que le métal est ancré sur ledit support par l'intermédiaire de l'oxyde.

### 2 - Procédés d'élaboration

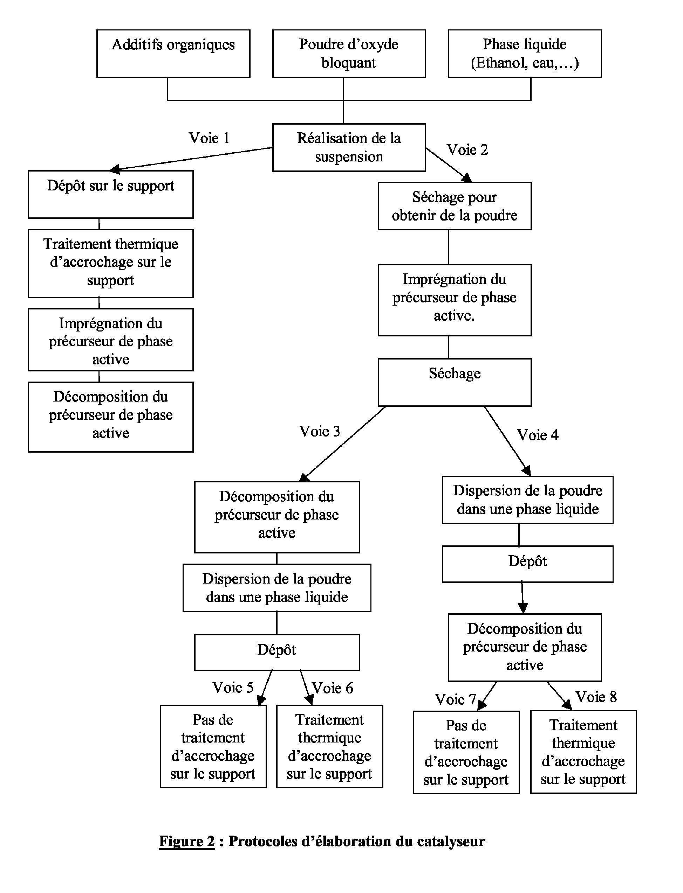

La Figure 2 est un schéma représentatif du procédé objet de la présente invention et de ses variantes.
La microstructure finale du catalyseur est constituée d'une phase active greffée sur un oxyde bloquant, lui-même accroché sur un support, comme présenté à la Figure 1 précédente

### 2.1 - Préparation de la suspension d'oxyde bloquant

La première étape des procédés d'élaboration est commune. Elle consiste à réaliser une suspension de la poudre d'oxyde bloquant. Les poudres nanométriques ont tendance à s'agglomérer naturellement à cause de la petite taille des particules. Il est nécessaire de désagglomérer cette poudre avant sont utilisation. Cette étape est en général plus efficace en milieu liquide. De plus, pour combattre la tendance naturelle à la réagglomération, on ajoute des composés organiques (dispersant,...), qui stabilisent l'état de dispersion.

Les poudres d'oxyde bloquant utilisées pour réaliser des dépôts de phase active présentent une taille moyenne de grains inférieure à 100 nanomètres et une surface spécifique de quelques dizaines de m²/g.

### 2.1.1 - Choix des additifs organiques

Les suspensions de particules céramiques nécessitent l'utilisation de composés organiques pour les stabiliser. Les principaux additifs sont les dispersants, les liants et les plastifiants.

Le dispersant est choisi en fonction de la nature de la poudre d'oxyde bloquant. Il faut obtenir une compatibilité chimique entre ces deux éléments. La quantité de dispersant à ajouter est déterminée à partir de la surface spécifique de la poudre.

Des liants et des plastifiants peuvent être incorporés à la suspension pour modifier ses propriétés rhéologiques. Ils sont particulièrement intéressants si l'élaboration est réalisée par projection, pour éviter le coulage de la suspension sur les zones verticales de la pièce.

### 2.1.2.- Choix de la phase liquide

La phase liquide sera choisie à partir des critères suivants :
- La nature des composés organiques qui doivent être solubles dans cette phase
- Les facilités de mise en oeuvre (toxicité,...)
- La méthode de dépôt.

Par exemple, l'éthanol est préféré quand une vitesse de séchage rapide est nécessaire (dépôt au pinceau,...). L'eau est préférée si la vitesse de séchage n'est pas un facteur limitant.

### 2.1.3 - Protocole de désagglomération de la poudre d'oxyde bloquant

Cette étape est importante pour deux raisons. La première est d'avoir une poudre en suspension assez fine pour s'infiltrer dans les zones étroites de la pièce. On estime en générale, qu'il faut un rapport 10 à 20 entre le diamètre des particules et le diamètre du plus petit trou capable d'être infiltré sans bouchage, dû à une accumulation de particules solides. La seconde raison concerne l'activité catalytique de la phase active, qui dépend de la surface développée. Plus cette dernière est grande, plus la surface de contact entre les réactifs et les sites catalytiques sera importante et l'efficacité du catalyseur élevée.

Par exemple, la dispersion de la poudre peut être réalisée dans de l'éthanol pendant 12 à 15 heures avec 11 % volumique de poudre par rapport au volume d'éthanol et 1 % massique de dispersant CP 213™ par rapport à la masse de poudre.

### 2.2.2 Voie 1 - Imprégnation de la phase active après dépôt de l'oxyde bloquant sur le support

Un premier protocole d'élaboration consiste à déposer la poudre d'oxyde bloquant sur le support avant d'y greffer les particules de phase active. La suspension de poudre nanométrique d'oxyde bloquant est déposée directement sur le support, au pinceau, par projection ou par immersion. Un séchage à 60°C permet d'éliminer l'éthanol et un traitement thermique entre 500°C et 800°C pendant 2 heures conduit à l'accrochage de la poudre d'oxyde bloquant sur le support. La phase active est ensuite imprégnée sous forme de précurseur en solution aqueuse, par exemple Rh(NO₃)₃.2H₂O (1% massique de Rh). On contrôle la concentration de cette solution en fonction de la teneur en phase active désirée. Le précurseur est ensuite décomposé à 500°C pendant 2 heures.

### 2.2.3 Voie 2 - Imprégnation de la phase active sur l'oxyde bloquant avant dépôt sur le support

Un second protocole d'élaboration consiste à sécher la poudre d'oxyde bloquant (à 60°C si la phase liquide est l'éthanol), après dispersion, afin de greffer la phase active. Cette dernière est apportée sous forme d'une solution aqueuse, par exemple Rh(NO₃)₃.2H₂O (1% massique de Rh), dont la concentration fixe la teneur finale en phase active. Plusieurs imprégnations successives peuvent être réalisées avec ou sans séchage à 40°C entre chaque dépôt. L'élimination complète de l'eau est réalisée à 180°C pendant 12 à 15 heures.

Deux possibilités s'offrent alors à nous, les voies 3 et 4.

### 2.3.1 Voie 3

Le précurseur de phase active, déposé sur la poudre d'oxyde bloquant, est décomposé entre 400 °C et 600°C. On réalise ensuite une suspension de cette poudre, comme décrit précédemment, pour la déposer sur le support, au pinceau, par projection ou par immersion. Un traitement thermique entre 500 °C et 1000°C permet l'accrochage de l'oxyde bloquant sur le support (Voie 6). Ce traitement n'est pas obligatoire, car il peut faire l'objet d'une procédure de démarrage de l'installation (Voie 5).

### 2.3.2 Voie 4

La poudre d'oxyde bloquant greffée du précurseur de la phase active est mise en suspension et à nouveau désagglomérée comme décrit précédemment. Le dépôt de l'oxyde bloquant est réalisé au pinceau, par projection ou par immersion. Le précurseur de la phase active est alors décomposé par un traitement thermique entre 400°C et 600°C. Un second traitement thermique entre 500°C et 1000°C peut alors permettre l'accrochage de l'oxyde bloquant sur le support (Voie 8). Ce traitement n'est pas obligatoire, car il peut faire l'objet d'une procédure de démarrage de l'installation (Voie 7).

La décomposition du précurseur et l'accrochage peuvent également être réalisé au cours du même traitement thermique.

### 3. - Exemples de réalisations

### 3.1 Dépôts de rhodium (Rh ; phase active) + imprégné sur de l'oxyde de gadolinium (Gd₂O₃ ; oxyde bloquant) sur un support en alumine (Al₂O₃).

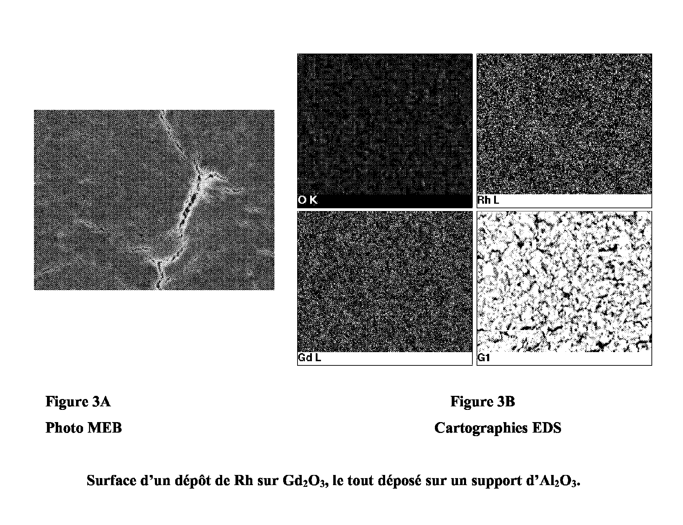

La Figure 3A est une photo prise au microscope électronique à balayage (MEB) de la surface d'un dépôt de Rh sur un oxyde bloquant Gd₂O₃, le tout déposé sur un support d'Al₂O₃, en suivant les voies 2, 3 et 5 du procédé schématisé à la Figure 2. La décomposition du précurseur de phase active est réalisée à 450°C pendant 2 heures. La Figure 3B est une cartographie EDS (Energy Dispersive Spectroscopy) réalisée sur cet échantillon. Elle met en évidence une excellente répartition du rhodium à la surface de l'échantillon.

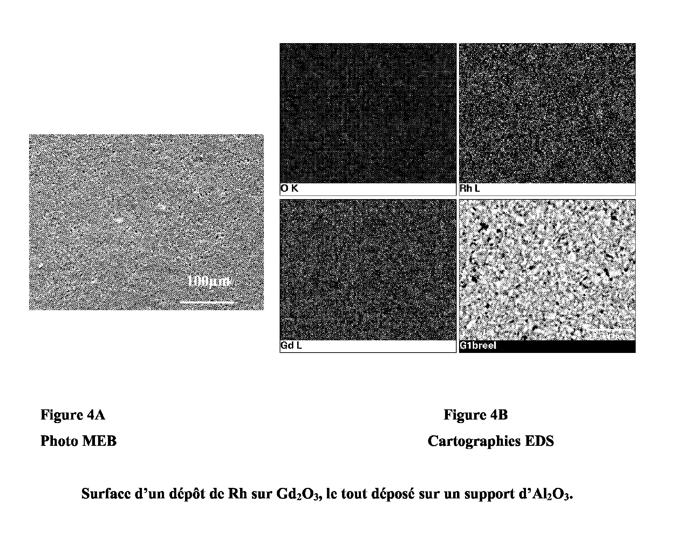

La Figure 4A est une photo prise au microscope électronique à balayage (MEB) de la surface d'un dépôt de Rh sur un oxyde bloquant Gd₂O₃, le tout déposé sur un support d'Al₂O₃, en suivant les voies 2, 4 et 8 du procédé schématisé à la Figure 2. Les traitements finaux d'accrochage et de décomposition du précurseur de phase active sont réalisés simultanément à 500°C pendant 2h. La Figure 4B est une EDS réalisée sur cet échantillon. Elle met aussi en évidence une excellente répartition du rhodium à la surface de l'échantillon.

### 3.2 - Dépôt de Rh (phase active) + ZrO₂ (oxyde bloquant) sur un support d'Al₂O₃.

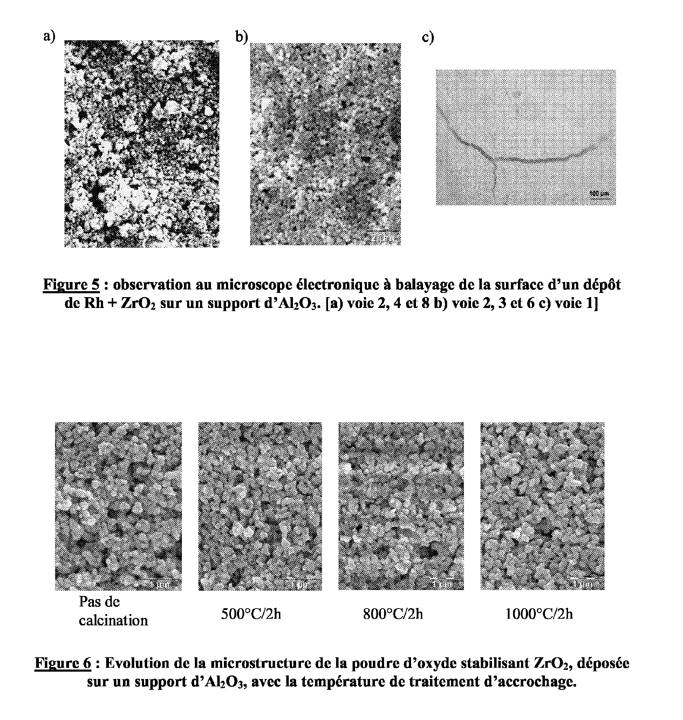

La Figure 5 est un ensemble de photos prises au microscope électronique à balayage de dépôts de Rh+ZrO₂ sur un support Al₂O₃ en suivants trois protocoles d'élaboration [Figure 5 a) : Voies 2, 4 et 8 ; Figure 5 b) : Voies 2, 3 et 6 ; Figure 5 c) : Voie 1] tels que décrits à la Figure 2 Les mesures EDS ne permettent pas d'identifier les différents matériaux car leurs masses atomiques sont très proches. On note un accrochage satisfaisant des dépôts avec les trois protocoles d'élaboration.

La Figure 6 consiste en des observations au microscope électronique à balayage de la surface de dépôts de ZrO₂ sur un support Al₂O₃, traités à différentes températures. L'oxyde bloquant ZrO₂ présente une excellente stabilité thermique. La taille des grains ne varie pas jusqu'à 1000°C. Ce point est important pour éviter l'encapsulation de la phase active qui peut se produire si l'oxyde bloquant sur lequel elle est greffée se densifie.

Le procédé et ses variantes, objets de la présente invention, permettent donc de réaliser un catalyseur constitué d'un support solide (support), d'un oxyde, actif ou non, bloquant (ou stabilisant ou greffant) et d'une phase active métallique, dans lequel la dispersion de la phase active est assurée par son greffage (ancrage) sur l'oxyde bloquant avant ou après son dépôt sur le support.

Les interactions fortes entre la phase active et l'oxyde bloquant limitent le phénomène de diffusion/ségrégation/frittage-coalescence des particules de phase active essentiellement associé à la diffusion surfacique. Cet oxyde peut également avoir un effet catalytique sur les réactions mises en jeu. On citera à titre d'exemple la limitation du dépôt de carbone, responsable d'une baisse d'activité du catalyseur, dans les réactions de reformage du méthane. En présence d'un support de type oxyde capable de stocker et de libérer de l'oxygène, le carbone formé sur les sites actifs est oxydé en CO ou CO₂.

## Revendications

1. Ensemble catalytique destiné à catalyser des réactions chimiques en phase gazeuse, constitué d'un support solide, sur la surface (Σ) duquel est fixé un oxyde d'ancrage (O) de nature chimique différente à celle dudit support solide (Σ), ledit oxyde d'ancrage recouvrant une proportion surfacique non nulle de ladite surface dudit support solide (Σ) et d'une phase métallique catalytiquement active (M) pour la réaction chimique considérée, **caractérisée en ce que** ladite phase métallique catalytiquement active (M) est ancrée sur ledit support solide (Σ) par l'intermédiaire dudit oxyde d'ancrage (O), lui-même greffée sur ledit support solide (Σ).

2. Ensemble tel que défini à la revendication 1, lequel la phase métallique catalytiquement active (M) est choisie parmi le platine, le palladium, le rhodium, l'iridium, le cobalt ou le nickel ou des alliages de ces métaux.

3. Ensemble tel que défini à l'une des revendications 1 ou 2, dans lequel ledit oxyde d'ancrage (O) est choisi parmi les oxydes de bore, d'aluminium, de gallium, de cérium, de silicium, de titane, de zirconium, de zinc, de magnésium ou de calcium, les oxydes mixtes de métaux alcalino-terreux de métaux, les silicates d'aluminium et/ou de magnésium ; les phosphates de calcium et leurs dérivés ; ou bien parmi les oxydes céramiques dopés qui, à la température d'utilisation, sont sous forme d'un réseau cristallin présentant des lacunes en ions oxydes et plus particulièrement sous forme de phase cubique, de phase fluorite, de phase pérovskite, de type Aurivillius, de phase Brownmillerite ou de phase pyrochlore.

4. Ensemble tel que défini à la revendication 3, lequel ledit oxyde d'ancrage (O) est choisi parmi l'oxyde de magnésium (MgO), l'oxyde de calcium (CaO), l'oxyde d'aluminium (Al₂O₃), l'oxyde de gadolinium (Gd₂O₃), l'oxyde d'yttrium (Y₂O₃) l'oxyde de titane (TiO₂), l'oxyde de zirconium (ZrO₂), la cérine (CeO₂), les oxydes mixtes de strontium et d'aluminium SrAl₂O₄ ou Sr₃Al₂O₆ ; les oxydes mixtes de cérium et de gadolinium (CeₓGd₁₋ₓO₂) ; l'oxyde mixte de baryum et de titane (BaTiO₃) ; l'oxyde mixte de calcium et de titane (CaTiO₃) ; la mullite (2SiO₂.3Al₂O₃), la cordiérite (Mg₂Al₄Si₅O₁₈) ou la phase spinelle MgAl₂O₄ ; l'hydroxy apatite Ca₁₀(PO₄)₆(OH)₂ ou le phosphate tricalcique Ca₃(PO₄)₂, ou encore l'oxyde de lanthane et de nickel (LaNiO₃).

5. Ensemble tel que défini à la revendication 3, lequel ledit oxyde d'ancrage (O) est choisi parmi les oxydes céramiques dopés, il y a :
(a) - Les oxydes de formule (I) :
(MₐO_{b})₁₋ₓ (R_{c}O_{d})ₓ (I),
dans laquelle M représente au moins un atome trivalent ou tétravalent principalement choisi parmi, le bismuth (Bi), le cérium (Ce), le zirconium (Zr), le thorium (Th), le gallium (Ga) ou l'hafnium (Hf), a et b sont tels que la structure MₐO_{b} est électriquement neutre, R représente au moins un atome divalent ou trivalent choisi principalement parmi le magnésium (Mg), le calcium (Ca) ou le baryum (Ba), le strontium (Sr), le gadolinium (Gd), le scandium (Sc), l'ytterbium (Yb), l'yttrium (Y), le samarium (Sm) l'erbium (Er), l'indium (In), le niobium (Nb) ou le lanthane (La), c et d sont tels que la structure R_{c}O_{d} est électriquement neutre, x est généralement compris entre 0,05 et 0,30 et plus particulièrement, entre 0, 075 et 0,15.

6. Ensemble tel que défini à la revendication 5, lequel ledit oxyde d'ancrage (O) est choisi parmi les oxydes céramiques dopés, de formule (Ia) :
(ZrO₂)₁₋ₓ (Y₂O₃)ₓ, (Ia),
dans laquelle x est compris entre 0,05 et 0,15,
ou de formule (Ib) :
Ce₁₋ₓGdₓO_{2-δ}
dans laquelle x est compris entre 0,01 et 0,5,
ou de formule (Ic) :
Ce₁₋ₓZrₓO₂
Dans laquelle x est compris entre 0,5 et 0,75 ;
(b) - Les matériaux pérovskites, de formule (II) :
[Ma₁₋ₓ Ma'ₓ] [Mb_{1-y} Mb'_{y}] O_{3-w} (II)
dans laquelle, Ma et Ma', identiques ou différents, sont choisis dans les familles des alcalino terreux, des lanthanides et des actinides et plus particulièrement parmi La, Ce, Pr, Nd, Pm, Sm, Eu, Gd, Tb, Dy, Ho, Er, Tm, Yb, Lu, Y, ou les Mg, Ca, Sr ou Ba, Mb et Mb', identiques ou différents, représentent un ou plusieurs atomes choisis parmi les métaux de transition, et plus particulièrement parmi Sc, Ti, V, Cr, Mn, Fe, Co, Ni, Cu, Zn ou Ga, x et y, identiques ou différents, sont supérieurs ou égaux à 0 et inférieurs ou égaux à 1 et w est tel que la structure en cause est électriquement neutre.

7. Ensemble tel que défini à la revendication 6, lequel ledit oxyde d'ancrage (O) est choisi parmi les manganites - lanthane - calcium (CaᵤLaᵥMnO_{3-w}), les manganites - lanthane - strontium (LaᵤSrᵥMnO_{3-w}), les cobaltites - lanthane - strontium (LaᵤSrᵥCoO_{3-w}), les cobaltites - lanthane - calcium (CaᵤLaᵥCoO_{3-w}), les cobaltites - gadolinium - strontium (GdᵤSr_{y}CoO_{3-w}), les chromites - lanthane - strontium (LaᵤSrᵥCrO_{3-w}), les ferrites - lanthane - strontium (LaᵤSrᵥFeO_{3-w}), les ferrites dopés - lanthane - strontium - métal de transition (LaᵤSrᵥFe_{c}Mb'_{d}O_{3-w}), telles que les ferrocobaltites - lanthane - strontium (LaᵤSrᵥCo_{d}Fe_{c}O_{3-w}), composés pour lesquels les sommes u + v et c + d sont égales à 1 et w est tel que la structure en cause est électriquement neutre.

8. Ensemble tel que défini à la revendication 7, lequel ledit oxyde d'ancrage (O) est choisi parmi La_{0,6}Sr_{0,4}Co_{0,8}Fe_{0,2}O_{3-w}, La_{0,5}Sr_{0,5}Fe_{0,9}Ti_{0,1}O_{3-w}, La_{0,6}Sr_{0,4}Fe_{0,9}Ga_{0,1}O_{3-w}, La_{0,5}Sr_{0,5}Fe_{0,9}Ga_{0,1}O_{3-w} ou La_{0,6}Sr_{0,4}Fe_{0,9}Ti_{0,1}O_{3-w}.

9. Ensemble tel que défini à l'une des revendications 1 à 8, dans lequel le matériau constitutif de la surface (Σ) dudit support est choisi parmi les oxydes de bore, d'aluminium, de gallium, de cérium, de silicium, de titane, de zirconium, de zinc, de magnésium ou de calcium, les oxydes mixtes de métaux alcalino-terreux de métaux, les silicates d'aluminium et/ou de magnésium ; les phosphates de calcium et leurs dérivés ou encore les alliages métalliques de type Ni-Cr.

10. Procédé de préparation d'un ensemble tel que défini à l'une des revendications 1 à 9, comprenant :
une étape (a) de préparation d'une suspension (S_{O}) dans un solvant comprenant de 5 % à 50 % volumique de poudre de l'oxyde d'ancrage (O) et éventuellement jusqu'à 25 % massique d'un ou plusieurs additifs choisis parmi les agents dispersants, les agents liants et/ ou les agents plastifiants ;
une étape (b) de dépôt de l'oxyde d'ancrage (O) sur le support solide, par application de ladite suspension (S_{O}) préparée à l'étape (a) sur la surface (Σ) dudit support solide ;
une étape (c) de traitement thermique à une température comprise entre 200°C et 900°C de l'oxyde d'ancrage (O), déposé sur la surface (Σ) du support solide ;
une étape (d) d'imprégnation dune solution (S_{M}) de précurseur de la phase active métallique (M), sur l'oxyde d'ancrage (O), préalablement déposée sur la surface (Σ) du support solide ;
une étape (e) de décomposition du précurseur de la phase active (M) imprégné sur l'oxyde d'ancrage (O) par un traitement thermique à une température comprise entre 200°C et 900°C., pour générer ladite phase active métallique (M).

11. Procédé tel que défini à la revendication 9, comprenant en outre une étape (a1) de désagglomération de la suspension préparée à l'étape (a) avant la mise en oeuvre à l'étape (b).

12. Procédé tel que défini à la revendication 9, comprenant en outre une étape (b1) de séchage de l'oxyde d'ancrage (O) déposé sur la surface (Σ) du support solide, avant la mise en oeuvre de l'étape (c).

13. Variante du procédé tel que défini à la revendication 9, comprenant les étapes suivantes :
une étape (f) de séchage de la suspension de l'oxyde d'ancrage (O) préparée à l'étape (a), pour éliminer le solvant et obtenir une poudre (P_{O}) comprenant l'oxyde d'ancrage (O) et les éventuels additifs ;
une étape (g) de mélange de la poudre (P_{O}) obtenue à l'étape (f), avec la solution (S_{M}) de précurseur de la phase active métallique (M) pour obtenir une suspension (S_{OM}) ;
une étape (h) de séchage de ladite suspension (S_{OM}) obtenue à l'étape (g), jusqu'à élimination complète du solvant ;
une étape (i) de traitement thermique à une température comprise entre 200°C et 900°C du mélange obtenu à l'étape (h), pour obtenir une poudre (P_{OM}) d'oxyde d'encrage (O) imprégné de ladite phase active métallique (M) ;
une étape (j) de préparation d'une suspension (S'_{OM}) de la poudre (P_{OM}) obtenue à l'étape (i) dans un solvant
une étape (k) de dépôt de l'oxyde d'ancrage (O) imprégné de la phase active (M), sur la surface (Σ) du support solide, par application de ladite suspension (S'_{OM}) préparée à l'étape (j), sur la surface (Σ) dudit support.

14. Variante du procédé tel que défini à la revendication 9, comprenant les étapes suivantes :
une étape (f) de séchage de la suspension de l'oxyde d'ancrage (O) préparée à l'étape (a), pour éliminer le solvant et obtenir une poudre (P_{O}) comprenant l'oxyde d'ancrage (O) et les éventuels additifs ;
une étape (g) de mélange de la poudre (P_{O}) obtenue à l'étape (f), avec la solution (S_{M}) de précurseur de la phase active métallique (M) pour obtenir une suspension (S_{OM}) ;
une étape (m) de désagglomération de (S_{OM}) obtenue à l'étape (g) ;
une étape (n) de dépôt de l'oxyde d'ancrage (O) imprégné du précurseur de la phase active (M), sur la surface (Σ) du support solide, par application de ladite suspension (S_{OM}) désagglomérée à l'étape (m), sur ladite surface (Σ) ;
une étape (o) de traitement thermique à une température comprise entre 200°C et 1200°C, dudit l'oxyde d'ancrage (O) imprégné du précurseur de ladite phase active métallique (M), déposé sur la surface (Σ) du support solide, pour obtenir ledit oxyde d'ancrage (O) imprégné de ladite phase active métallique (M).

15. Variante telle que définie à l'une des revendications 12 ou 13, comprenant en outre :
une étape (l) de traitement thermique à une température comprise entre 200°C et 1200°C de l'oxyde d'ancrage (O) imprégné de ladite phase active métallique (M), déposé sur la surface (Σ) du support solide.

16. Procédé tel que défini à l'une des revendications 9 à 12, ou variantes du procédé telle que définie à l'une de revendications 13 ou 14, pour fixer une phase métallique catalytiquement active (M) sur la surface intérieure (Σ) d'un réacteur.

17. Procédé tel que défini à la revendication 15, appliqué à la préparation d'un réacteur catalytique membranaire sur la surface intérieure de laquelle est mise en oeuvre la réaction d'oxydation d'un flux de gaz naturel par de l'oxygène séparé d'un courant d'air circulant à la surface externe dudit réacteur, par électrochimie à travers la membrane céramique constitutive dudit réacteur.
